# EUROPEAN PATENT SPECIFICATION

(11) **EP 4 296 985 B1**
(45) Date of publication and mention of the grant of the patent: **14.01.2026**
(21) Application number: 23178714.4
(22) Date of filing: 12.06.2023
(51) Int. Cl.: G08B 13/196, G08B 29/22

(54) **ELECTRONIC MONITORING SYSTEM WITH ACTIVITY ZONE ALIGNMENT TOOL**
ELEKTRONISCHES ÜBERWACHUNGSSYSTEM MIT WERKZEUG ZUR AUSRICHTUNG DER AKTIVITÄTSZONE
SYSTÈME DE SURVEILLANCE ÉLECTRONIQUE AVEC OUTIL D'ALIGNEMENT DE ZONE D'ACTIVITÉ

(30) Priority: 15.06.2022 US 202217841179
(43) Date of publication of application: 27.12.2023
(73) Proprietor: Arlo Technologies, Inc., Carlsbad, CA 92008 (US)
(72) Inventor: Kretsch, Mark, Carlsbad, 92008 (US)
(74) Representative: Grünecker Patent- und Rechtsanwälte PartG mbB

(56) References cited:
- CN-B- 105 959 517
- KR-B1- 101 600 314
- US-A1- 2015 102 226

## Description

### BACKGROUND OF THE INVENTION

### 1. Field of the Invention

The present invention relates to an electronic monitoring system and, more particularly, to an electronic monitoring system that allows for flexible definition of contiguous or noncontiguous activity zones.

### 2. Discussion of the Related Art

Cameras have long been used as part of monitoring and/or surveillance systems. More recently, cameras have been coupled with electronic sensors to detect triggering events, such as a detected motion, to initiate image capturing and recording of an area once a triggering event has occurred. In one example, a wide-angle passive infrared detector (PIR) is attached to the camera providing a field-of-view (FOV) approximating that of the camera. When the PIR is triggered by motion within an "activity zone" defined by the PIR FOV, the camera may be activated to capture and record video. In some cases, the image of the camera is used to define one or more activity zones that are smaller than the camera's FOV. The size and location of the activity zone within the larger FOV can be user-specified.

The cameras in such systems are frequently battery-powered, and combining the camera with a PIR detector can reduce power consumption by allowing initial motion detection by the low-power consumption PIR detector and activation of the high-power consumption camera only as needed.

When a wide angle PIR detector is employed in such combined camera/PIR systems, background motion (traffic, etc.) can undesirably cause repeated false triggering of the camera. Multiple PIR detectors may be used to allow the user to define a custom "activity zone" for camera activation that can encompass areas of interest and avoid background nuisance motion.

US 2015/102226 A1 discloses a PIR sensor system having a first PIR sensor associated with a first sensing region and a second PIR sensor associated with a second sensing region, which partially overlaps with the first sensing region. Each detection cell of the first and second sensing region is represented by predetermined characteristics of first and second output signals, which signals are based on input signals from first and second sensing elements of each PIR sensor and a processing unit of the PIR sensor system associates the characteristics of the first and second output signals with one of the detection cells.

CN 105 959 517 B discloses an infrared detection smart start camera, which includes a camera body, LED lights, a connection seat, a servo and a microcontroller. The camera body is provided with a chassis on top and with a joint bearing on the left and right sides. Said joint bearing is provided with a carbon fiber plate, which has a pyroelectric infrared sensor mounted at the end. The connecting seat is provided with a second carbon fiber tube, which is rotationally connected with the connecting seat. The second carbon fiber tube is provided with a second joint bearing at the end, which is connected with the carbon fiber plate, wherein the carbon fiber plate is inlaid with a third joint bearing, which is installed with a second pyroelectric infrared sensor.

### SUMMARY OF THE INVENTION

In accordance with a first aspect of the invention, a monitoring system is provided that is configured to assist the user in positioning multiple PIR sensors to create a contiguous activity zone, for example, when gapless perimeter detection is desired. The second aspect of the invention permits flexibility in defining both isolated or contiguous activity zones.

. The invention is set out in the appended claims. Examples, aspects and embodiments presented in the following and not necessarily falling under the scope of the claims are provided in the application to better understand the invention.

The system may include first and second spotlights that are activated, each of which is activated when motion is detected by an associated PIR. The spotlights may coupled to a dedicated or stand-alone imaging device, which may have its own PIR.

A nonlimiting feature of this embodiment is the ability to provide flexibly defined activity zones while also allowing the assembly of those zones into a contiguous detection boundary by eliminating gaps.

These and other features and advantages of the invention will become apparent to those skilled in the art from the following detailed description and the accompanying drawings. It should be understood, however, that the detailed description and specific examples, while indicating preferred embodiments of the present invention, are given by way of illustration and not of limitation. Many changes and modifications may be made within the scope of the present invention and the invention includes all such modifications.

### BRIEF DESCRIPTION OF THE DRAWINGS

Exemplary embodiments of the invention are illustrated in the accompanying drawings in which like reference numerals represent like parts throughout, and in which:
FIG. 1 is a top plan view of a wall-mountable escutcheon providing independently articulated floodlights and a camera, each incorporating a motion detector and generally showing the fields-of-view of the motion detector and the camera;
FIG. 2 is a front elevational view of the escutcheon of FIG. 1, showing the sensing regions of the motion detectors, the camera lens and floodlight elements, and camera illumination, and showing an electronic controller that may execute a stored program and wireless transceiver for communication with one or more remote portable devices,
FIG. 3 is an electronic block diagram showing the circuitry controlling and associated with the motion detectors, cameras, and floodlights of FIGS. 1 and 2
FIG. 4 is a fragmentary view of an articulated joint allowing motion in elevation, azimuth, and rotation and providing indicia delineating such positioning;
FIG. 5 is a simplified view of an installation of the escutcheon of FIGS. 1 and 2 showing the ability to define activity zones that vary in azimuth and elevation;
FIG. 6 is a flowchart showing execution of the stored program by the computer of FIG. 3 for implementing an alignment of motion detectors according to one embodiment of the present invention;
FIG. 7 is a display of a portable device that may be used during the alignment process of FIG. 6 to indicate adjustments necessary for gap-less activity zones;
FIG. 8 is a simplified representation of the field-of-view of the motion sensors and the camera showing the ability to define activity zones within the field-of-view of the camera; and
FIG. 9 is a graphical display showing activity zones superposed on a camera image to assist in adjustment of those regions.

### DETAILED DESCRIPTION

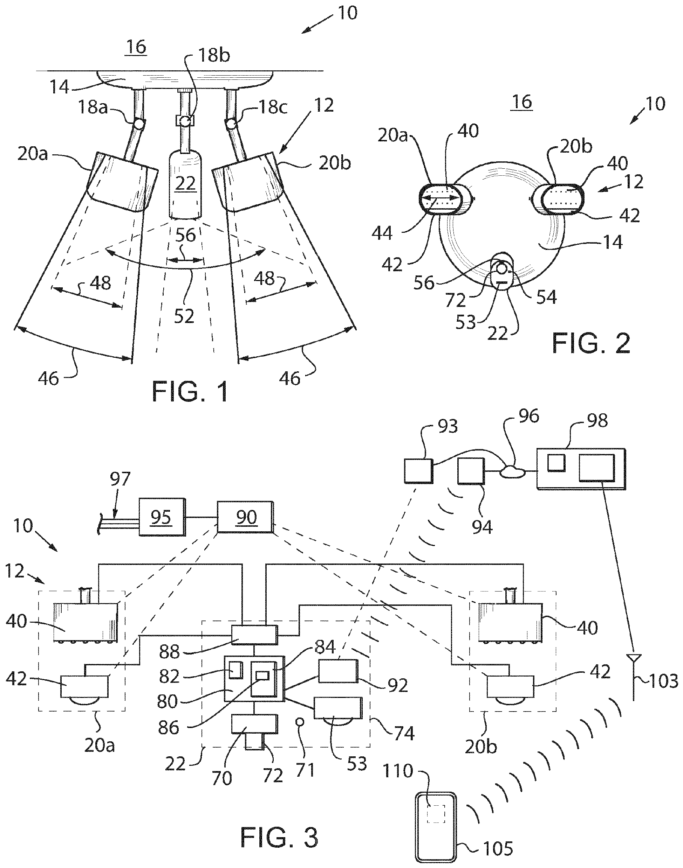

Referring now to FIGS. 1 and 2, in accordance with an aspect of the invention, an electronic system 10 for real-time monitoring may include a camera/floodlight assembly 12 configured to monitor an area of interest. The system 10 may additionally include more than one such assembly 12 and/or other monitoring and/or imaging devices or assemblies such as a stand-alone surveillance camera, a video doorbell, smoke detectors, etc. These devices and assemblies may communicate wirelessly with each other and also may communicate wirelessly with an external server and one or more user devices via a gateway router or simply router, possibly with the assistance of a base station as described below.

Still referring to FIGS 1 and 2, the camera/floodlight assembly 12 has escutcheon 14, for example, that may mount against a building wall 16, a soffit, a fence, a light pole, or the like and which provides a support plate for the camera/floodlight assembly 12. The escutcheon 14 may have a hollow rear face to receive and cover electrical connections to an electrical main or the like as well as physical connections of the escutcheon 14 to the wall 16 by screws or bolts as is generally understood in the art.

The front surface of the escutcheon 14 may support three articulated joints18a-18c extending forward therefrom to attach respectively to rear surfaces of a first motion detector floodlight 20a, an imaging device or camera module 22, and a second motion detector floodlight 20b, respectively. Unless otherwise specified, the presence of a numerical reference character such as "20", unaccompanied by an alphabetical designator such as "a" or "b", should be understood to refer to any or all of the devices designated by the a combination of the numerical and alphabetical components. Hence, "20" standing alone should be understood to refer to either or both of 20a and 20b and "18" standing alone should be understood to refer to any or all of 18a, 18b, and 18c.

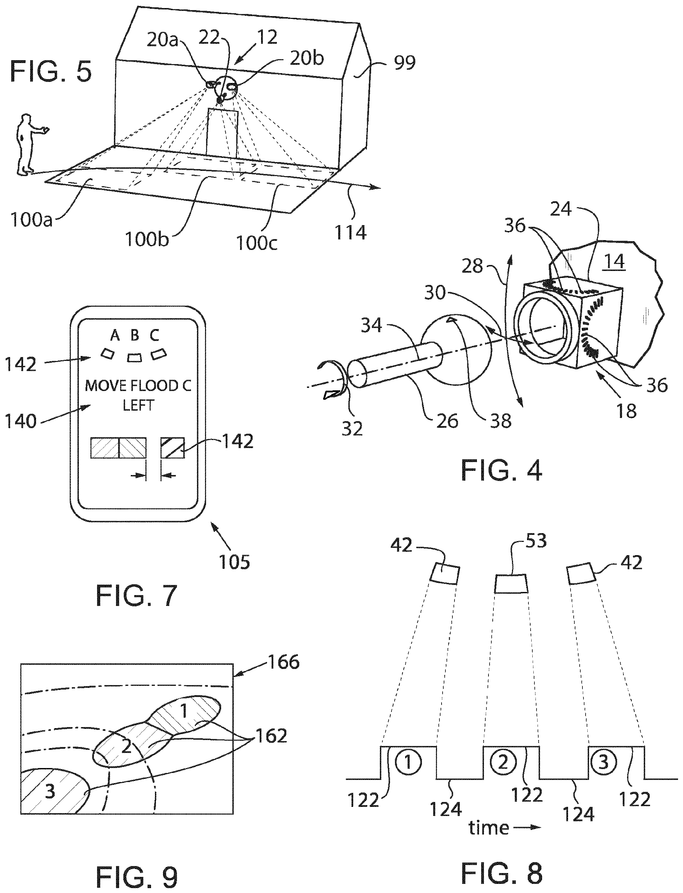

Referring momentarily to FIG. 4, each articulated joint 18 may provide for a fixed portion 24 attached to the escutcheon 14 and a movable portion 26 attached to the rear surfaces of the motion detector, floodlights 20 and camera module 22. In one embodiment, the movable portion 26 may be positioned with respect to the escutcheon 14 at various angles in elevation 28 and azimuth 30 and may pivot 32 about a central axis 34 generally aligned with the axes of sensitivity of the motion detector, floodlights 20 and camera module 22. In a typical orientation shown in FIG. 2, the elevation 28 will be vertical, the azimuth 30 will be horizontal, and central axis 34 will extend generally in a horizontal direction when the articulated joint 18 is centered in azimuthal and elevational movement. Indicia 36, for example, molded embossments or printed markings, may be provided on the fixed portion 24 to guide the setting of the angles of azimuth and elevation, and similar indicia 38 may be placed on the movable portion 26 to guide pivoting motion.

Referring again to FIGS. 1 and 2, each of the motion detector floodlights 20 will include an upper floodlight assembly 40 that typically has multiple LED emitters directed forwardly to emit in excess of 500 lm generally along the central axis 34 when the motion detector floodlight 20 is centered in azimuth and elevation. Positioned beneath the floodlight assembly 40 is a forward facing passive infrared (PIR) detector 42. The floodlight assembly 40 will generally have a greatest extent along a width 44 (typically horizontally oriented) matching a greatest width of its illumination pattern 46 and also matching a greatest width of the field-of-view (FOV) 48 of the associated PIR detector 42.

Referring still to FIGS. 1 and 2, the camera module 22 includes at least a video camera 70 (FIG. 3), and may additionally include other components found in imaging devices of monitoring systems, including one or more of a motion sensor, a microphone, a speaker, and an alarm. The camera 70 has a forward facing wide-angle lens 72 providing a camera field-of-view (FOV) 52 that may, for example, be greater than 100° and typically greater than 160° in azimuth. The camera module 22 will also include an integrated PIR detector 53 having a field-of-view width 56 centered on the field-of-view 58. This FOV may be smaller than that field-of-view 58. It may also define a fixed or user-settable activity zone. A light source 57 is provided on a front face of the camera module 22 emitting infrared or visible light to provide light for the camera 70, but at an intensity generally much lower than the light provided by the floodlight assembly 40. An indicator light 54 may be provided indicating activation of the PRI detector 53 by motion of an infrared emitting body such as an individual passing within the field-of-view 56. An ambient light sensor 71, (FIG. 3) is provided, for example, to suppress operation of the floodlight assembly during daylight hours.

Referring now to FIG. 3, in one embodiment, the camera module 22 may provide for a camera 70 with a lens assembly 72 for obtaining video images, for example, at 2K HDR using a CMOS sensor or other sensing technology. A housing 74 of the camera module 22 holding the camera may also hold the PIR detector 53 with both the PIR detector 53 and camera70 communicating with an internal microcontroller 80. The microcontroller 80, for example, may provide for a processor 82 and a non-transient electronic memory 84 holding a stored program 86 to be executed by the microcontroller 80, at least in part, as will be discussed below. As is generally understood in the art, the microcontroller 80 may also include one or more interface lines for communicating with the camera70, the PIR detector 53, the ambient light detector 71, and an interface 88 (for example, the I²C protocol) allowing communication with other elements of the camera/floodlight assembly 12. In particular, the interface 88 may communicate with floodlight assemblies 40 of each of the motion detector floodlights 20a and 20b to provide signals independently turning the floodlight assemblies 40 on and off, and with the PIR detectors 42 of each of the motion detector floodlights 20a and 20b to receive signals therefrom. As will be discussed below, the floodlight assemblies 40 generally will include necessary driver circuitry so that they can be activated by the camera module 22 by remote command or be dependent on the receipt of electrical signals indicating motion from the PIR detectors 42 or 53.

Importantly, the microcontroller 80 may also communicate with a wireless transceiver 92, for example, using the IEEE 802.11 standards in accordance with the Wi-Fi^{™} communication protocol. The wireless transceiver 92 may communicate with a base station 93 or wireless router 94, for example, in the user's home, and via either of these devices, through the Internet 96 with remote server 98 including one or more computer processors. The remote server 98, which may be a cloud-based server, may in turn communicate with the cellular network 103 providing communication with user devices, typically in the form of portable wireless devices 105 such as a smart phone, tablet, or laptop. It also could provide communications with one or more stationary devices such as a PC. As is understood in the art, such wireless portable devices 105 may include one or more internal processors, a computer memory holding stored programs in the form of applications, a wireless transceiver, and a display such as a touchscreen or the like allowing for inputs from a user and the display of graphical or text information, as well as a speaker and microphone for delivering and receiving voice commands. Such portable wireless devices 105 are typically battery-powered so as to be carried by a user if desired during the processing be described herein.

Generally, it will be understood that the logic to be described with respect to the operation of the system 10 may be distributed among multiple processors variously within the camera module 22, a base station 93 and/or a router 94 in the user's house, or the central server 98.

An internal battery 90, provided with recharging capabilities from charger unit 95 connected to line voltage 97, may provide power to each of the floodlight assemblies 40, the circuitry of the PIR detectors 42, and the circuitry associated with the camera module 22 within housing 74.

Referring now to FIG. 5, when the camera/floodlight assembly 12 is attached to a structure 99 such as a home, building, post, fence or the like, the PIR detectors 42 and 53 in the respective individual motion detector floodlights 20a, 20b and camera module 22 may be independently positioned and aligned to define multiple activities zones 100a, 100b, and 100c. These multiple activities zones 100a, 100b, and 100c may be located freely at different elevational and azimuthal positions, being generally left and right positions with respect to the structure 99. They also may extend different distances from the structure 99. This is in contrast to a conventional camera-attached, wide-angle PIR which can provide only a linear contiguous activity zone at a fixed elevation and azimuth with respect to the camera module 22. While the activities zones 100 are shown as approximately square, in practice they may be much wider than tall. The ability to swivel the PIR detectors 42 in their respective motion detector floodlights 20 using the pivoting of joint 18 allows these elongated zones to be flexibly oriented, for example, angled paths or regions.

This freedom of positioning of the motion detector floodlights 20 independent of the camera module 22 allows additional flexibility in locating the activity zones 100 (and thus triggering of the camera module 22) permitting the activity zones 100 to be discontinuous or at different elevations in areas of interest where there is no concern about undesirable background motion. This flexibility is accommodated, while preserving the ability to define contiguous activities zones 100 producing a continuous perimeter border, by providing a tool allowing the user to properly identify and locate these activities zones 100 and to ensure that they are contiguous when so desired.

Referring now to FIGS. 3, 5, 6, and 7, this tool may be activated by the user as indicated by process block 102, for example, using a portable wireless device 105, and may execute any of the processors described above with respect to FIG. 2, for example, implemented by an application program 110 held, in part, on the portable wireless device 105 and, in part, on the server 98, the microcontroller 80, and a processor associated with a base station 93.

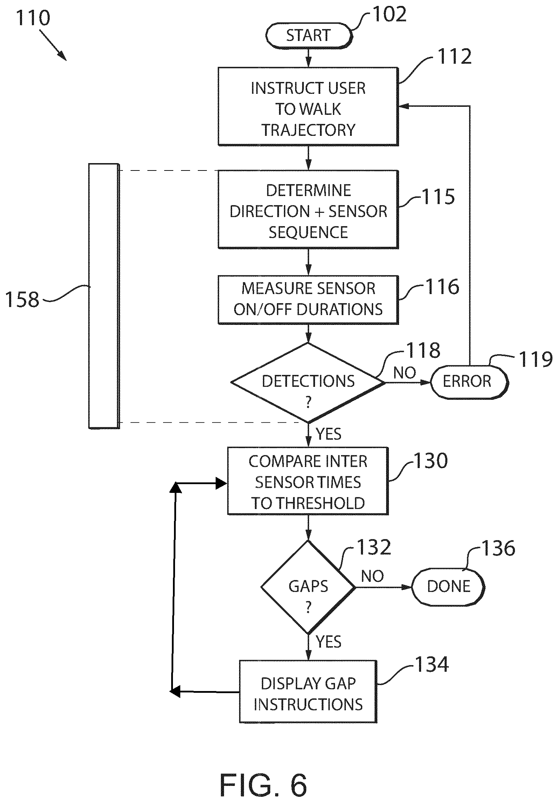

As indicated by process block 112 of FIG. 6, the program 110 may instruct the user to walk a trajectory 114 selected to pass through desired activity zones 100 determined by the user. This instruction may be by text, a tone or series of tones, or voice message, for example, output on the portable wireless device 105. The program 110 then waits at process block 115 to receive a signal from the camera module 22 indicating detection of the user by one of the PIR detectors 42 or 53. A first detection event generally indicates the direction of the trajectory 114. For example, if the first detection event is the leftmost PIR detector 42, a trajectory from left to right will be inferred, otherwise a right to left trajectory will be inferred. If the first detection event is the PIR detector 53 on the camera module 22, or at any time if the inferred sequence is violated, the user is so notified that one or both of the motion detector floodlights 20 is not providing a detection signal and instructed to adjust the angle of the particular motion detector floodlights 20 (or both) where no signal was detected during the trajectory 114 and to try the trajectory again.

If no sequence error has occurred, as determined at process block 115 discussed above, then at process block 116 the program 110 times the on-time and off-time intervals and records the sequence of activation of each of the three PIR detectors 42 and 53. This timing process is concluded when a third PIR detector in the imputed sequence indicates an activation at decision block 118 or optionally after activation has been detected and then no longer detected or continuously detected within a period of time, for example, 30 seconds. Otherwise, an error condition is indicated at block 119 and the user is given instructions to start over at process block 112.

As shown in FIG. 8, these measurements yield a timing profile 120 having a set of on-times 122 each identified to a particular PIR detector 42 or 53, typically but not necessarily separated by off-times 124. At process block 130, this timing profile 120 is reviewed and if the off-times 124 between on-times exceed a predetermined value (e.g., one second) per decision block 132, the user is informed at block 134 that there is a gap between detected activity zones 100 along the trajectory 114. The user then is provided with instructions for adjusting the articulated joints 18 to eliminate that gap and then instructed to repeat this process after adjustment is made, per process block 134. When no gaps indicated by off-times 124 are detected, the program 110 concludes, as indicated by process block 136, and the user is instructed that a gap-less sensing region has been established.

Referring now to FIG. 7, in one embodiment these instructions to the user with respect to eliminating gaps may be text, tones or other sounds, or spoken instructions 140 delivered, for example, by the user's portable wireless device 105 or on a stationary display screen referred to by the user. When the user can carry the wireless device 105 during this process, the portable wireless device 105 may also display a representation 142 of the PIR detectors 42 and 53 and indicate the times when each one is in a sensing or "on" -time 122 to further help the user visualize the region of the activities zones 100 on the ground. Alternatively, this function may be provided by the indicator light 54 or momentary activation of the floodlight assemblies 40. In addition or as an alternative to the representation 142 of the timing profile 120, the display may instruct the user as to a direction (e.g., up, down, left, right) of movement of a particular motion detector floodlight 20 (left or right) necessary to close the gap and optionally may estimate the amount of articulation (e.g., 10 deg.) necessary with respect to the indicia 36 and 38 described with respect to FIG. 4. The display may offer the user the option, for example, between moving the camera module 22 or moving a motion detector floodlights 20 in order to reduce that gap.

Referring now again to FIGS. 6 and 9, in one embodiment, the camera module 22 may be activated to acquire video imagery during process blocks 115-118 as indicated by process block 158 displaying visually the activity zones 100 as visualized activity zones 162 on a display 166. This image may be generated using the timing profile 120 to produce the visualized activity zones 162 by highlighting any motion in the acquired video image during the on-times 122 and marking that motion (for example, with a number) according to the particular device responsible for the on-time being either a motion detector floodlight 20 or camera module 22. In this way, the user can obtain a camera view of each activity zone 100.

Referring again to FIG. 3, it will be appreciated that the communication between the camera module 22 and each of the detectors 42 and 53 allows flexible operation of the floodlight assemblies 40 For example, each floodlight assembly 40a or 40b may only be activated during the detection of motion in its associated activity zones 162, or, alternatively, in two or even all activity zones 162. Likewise particular detectors 42 or 53 may be deactivated, for example, when only one or two activity zones are desired.

While the above-described embodiment shows only three field-of-view motion sensors 42 and 53 and the camera 70, it will be appreciated that the principles of the present invention can be expanded to multiple such units coordinated together to provide for continuous multizone regions of greater than three activity zones 100 and that the individual units in some cases can be separated for separate mounting using different housings while inter-communicating. Generally, it will be appreciated that the camera module 22 may flexibly control the relationship between detection of motion signals from various motion sensors 42 and 53 and activation of the floodlight assemblies 40 so that a given floodlight assembly 40 may or may not be activated in time with its associated motion detector 42 or floodlight assemblies 40 may be activated at other times. Generally the floodlight assemblies 40 will include driver circuitry for switching the necessary currents for the LEDs as triggered by low-level communication signals. While the above description uses the portable wireless device 105 in communication with the user, it will be appreciated that other devices can provide this interface including the camera module 22 which may include a microphone for receiving voice commands and a speaker for providing audible cues and instructions.

The target that moves along the continuous path typically will be a person walking along the path. It is conceivable, however, that the target could be an autonomous or remote controlled moving object, such as a drone flying along the path or a vehicle moving along the path under control of a user operating a portable device.

As is generally understood to those of ordinary skill in the art, the various processors described including those in the server 98, the camera module 22, and in the portable wireless device 105 may employ any standard architecture and may include but are not limited to: a central processing unit (CPU), an array processor, a vector processor, a digital signal processor (DSP), a field-programmable gate array (FPGA), a programmable logic array (PLA), an application-specific integrated circuit (ASIC), programmable logic circuitry, and a controller. The memory associated with any of these processors can store instructions of the program 110 and/or program data as well as video data and the like. The memory can include volatile and/or non-volatile memory. Examples of suitable memory include RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, disks, drives, or any other suitable storage medium, or any combination thereof.

An exemplary camera module 22 capable of implementing aspects of the invention is commercially available under the Arlo Ultra brand from Arlo Technologies, Inc. in Carlsbad, California, US. An exemplary base station 93 capable of incorporating aspects of the invention is commercially available under the Arlo SmartHub brand from Arlo Technologies in Carlsbad, California, US. Alternatively, base station 93 may be omitted, and its circuitry and functionality may be provided at least in part the router 94, and in other devices such as the server 98 and/or the camera module 22.

Although the best mode contemplated by the inventors of carrying out the present invention is disclosed above, practice of the above invention is not limited thereto. It will be manifest that various additions, modifications, and rearrangements of the features of the present invention may be made without deviating from the scope of the underlying inventive concept, as defined by the appended claims.

## Claims

1. An electronic monitoring system (10) comprising:
a first and second passive infrared ,PIR, motion detector (42) configured to detect motion, the first and second PIR motion detectors (42) having respective first and second fields-of-view (48) and providing respective first and second electronic motion signals upon a detection of motion in the respective first and second fields-of-view (48);
a first and second articulated joint (18a, 18c) communicating respectively with the first and second PIR motion detectors (42) and allowing independent angular adjustment of the first and second fields-of-view (48),
an electronic processor (80) executing a stored program and receiving the electronic motion signals from the first and second PIR motion detectors (42) and operating to:
(a) in response to a target moving along a continuous path (114) through the first and second fields-of-view (48), monitor the first and second electronic motion signals to determine times of detection (120) of the target by the first and second PIR motion detectors (42); and
(b) provide an output to a user indicating a gap in detection by the first and second PIR motion detectors (42) of the target on the continuous path (114) imputed from the times of detection (120), the output indicating a necessary angular adjustment for providing gapless detection.

2. The electronic monitoring system (10) of claim 1, further including:
a third PIR motion detector (53) having a respective third field-of-view (56) and providing a third electronic motion signal upon a detection of motion in the third field-of-view (56);
a third articulated joint (18b) communicating with the third PIR motion detector (53) allowing independent angular adjustment of the third field-of-view (56), and
wherein the electronic processor (80) further executes the stored program to receive the third electronic motion signal from the third PIR motion detector (53) and operates to:
(a) in response to the target moving on the continuous path (114) through the third field-of-view (56), monitor the third electronic motion signals to determine times of detection (120) of the target by the third PIR motion detector (53); and
(b) provide an output to a user indicating a gap in detection of the target on the continuous path (114) imputed from the times of detection (120) of the target by the first, second, and third PIR motion detectors (42, 53), the output indicating a necessary angular adjustment for providing gapless detection.

3. The electronic monitoring system (10) of claim 2, further including a camera (22) attached to the third PIR motion detector (53) and having a field-of-view (52) containing the third field-of-view (56).

4. The electronic monitoring system (10) of claim 3, wherein the camera (22) communicates with the first, second, and third PIR motion detectors (42, 53) to obtain and transmit video data captured by the camera (22) when the camera (22) receives an electronic motion signal from each or any of the first, second, and third PIR motion detectors (42, 53).

5. The electronic monitoring system (10) of any of the preceding claims, further including a wireless link communicating between the electronic processor (80) and a portable device (105) adapted to be carried by the target moving on a continuous path (114) and wherein the output is an indication on the portable device (105) of a detection of the target by each or any of the first or second PIR motion detectors.

6. The electronic monitoring system (10) of any of the preceding claims, wherein the output provides a visual display (142) indicating the gap.

7. The electronic monitoring system (10) of any of the preceding claims, wherein at least one of the first and second PIR motion detectors (42) further includes a floodlight (20a, 20b) controllable by the electronic motion signal of the associated PIR motion detector (42).

8. The electronic monitoring system (10) of any of the preceding claims, further including a camera (22) having a field-of-view (52), and wherein the camera field-of-view (52) is larger in area than the field-of-view (48) of each of the first and second PIR motion detectors (42).

9. A method of area monitoring, comprising:
positioning first and second PIR motion detectors (42) to detect motion within respective first and second fields-of-view (48), and providing respective first and second electronic motion signals upon a detection of motion in the respective first and second fields-of-view (48), the first and second PIR motion detectors (42) supported on a first and second articulated joint (18a, 18c) communicating respectively with the first and second PIR motion detectors (42) and allowing independent angular adjustment of the first and second fields-of-view (48);
in response to a target moving on a continuous path (114) through the first and second fields-of-view (48), monitoring, by an electronic processor (80), the first and second electronic motion signals to determine times of detection (120) of the target by the first and second PIR motion detectors (42); and
providing, by the electronic processor (80), an output to a user indicating a gap in detection by the first and second PIR motion detectors (42) of the target on the continuous path (114) imputed from the times of detection (120), the output indicating a necessary angular adjustment for providing gapless detection.

10. The method of claim 9, further including:
positioning a third PIR motion detector (53) having a respective third field-of-view (56) providing a third electronic motion signal upon a detection of motion in the third field-of-view (56);
in response to the target moving on the continuous path (114) through the third field-of-view (56), monitoring, by the electronic processor (80), the third electronic motion signals to determine times of detection (120) of the target by the third PIR motion detector (53); and
providing, by the electronic processor (80), an output to a user indicating a gap in detection of the target on the continuous path (114) imputed from the times of detection (120) of the target by the first, second, and third PIR motion detectors (42, 53), the output indicating a necessary angular adjustment for providing gapless detection.

11. The method of claim 10, further including a camera (22) attached to the third PIR motion detector (53) and having a field-of-view (52) moving with the third field-of-view (56), and further comprising activating the camera (22) to obtain and transmit video data captured by the camera (22) when the camera (22) receives an electronic motion signal from each or any of the first, second, and third PIR motion detectors (42, 53).

12. The method of any of the claims 9-11, further including a wireless link communicating between the electronic processor (80) and a portable device (150) adapted to be carried by the target moving on a continuous path (114) and outputting an indication on the portable device (150) of a detection of the target by each or any of the first or second PIR motion detectors (42).

13. The method of any of claims 9-12, wherein the output provides a visual display (142) indicating the gap.

14. The method of any of claims 9-13, wherein at least one of the first and second PIR motion detectors (42) further includes a floodlight (20a, 20b), and further including controlling the floodlight (20a, 20b) with an electronic motion signal of the associated PIR motion detector (42).

15. The method of any of claims 9-14, further including a camera (22) having a field-of-view (52), and wherein the camera field-of-view (52) is larger in area than the field-of-view (48) of the first and second PIR motion detectors (42).

## Patentansprüche

1. Elektronisches Überwachungssystem (10), umfassend:
einen ersten und einen zweiten Passiv-Infrarot-, PIR-, Bewegungsdetektor (42), die dazu konfiguriert sind, Bewegung zu erfassen, wobei der erste und der zweite PIR-Bewegungsdetektor (42) jeweils ein erstes und ein zweites Sichtfeld (48) aufweisen und jeweils ein erstes und ein zweites elektronisches Bewegungssignal bei einer Erfassung von Bewegung in dem jeweiligen ersten und zweiten Sichtfeld (48) bereitstellen;
ein erstes und ein zweites Gelenk (18a, 18c), die mit dem ersten bzw. dem zweiten PIR-Bewegungsdetektor (42) kommunizieren und eine unabhängige Winkeleinstellung des ersten und zweiten Sichtfeldes (48) ermöglichen,
einen elektronischen Prozessor (80), der ein gespeichertes Programm ausführt und die elektronischen Bewegungssignale von dem ersten und zweiten PIR-Bewegungsdetektor (42) empfängt und folgende Funktionen ausführt:
(a) als Reaktion darauf, dass sich ein Ziel entlang eines kontinuierlichen Pfades (114) durch das erste und zweite Sichtfeld (48) bewegt, Überwachen des ersten und zweiten elektronischen Bewegungssignals, um Zeiten der Erfassung (120) des Ziels durch den ersten und zweiten PIR-Bewegungsdetektor (42) zu bestimmen; und
(b) Bereitstellen einer Ausgabe an einen Benutzer, die eine Lücke bei der Erfassung des Ziels auf dem kontinuierlichen Pfad (114) durch den ersten und den zweiten PIR-Bewegungsdetektor (42) anzeigt, die aus den Zeiten der Erfassung (120) errechnet wird, wobei die Ausgabe eine notwendige Winkeleinstellung zum Bereitstellen einer lückenlosen Erfassung anzeigt.

2. Elektronisches Überwachungssystem (10) nach Anspruch 1, des Weiteren beinhaltend:
einen dritten PIR-Bewegungsdetektor (53), der ein entsprechendes drittes Sichtfeld (56) aufweist und ein drittes elektronisches Bewegungssignal bei Erfassung von Bewegung in dem dritten Sichtfeld (56) bereitstellt;
ein drittes Gelenk (18b), das mit dem dritten PIR-Bewegungsdetektor (53) kommuniziert und eine unabhängige Winkeleinstellung des dritten und des zweiten Sichtfeldes (56) ermöglicht, und
wobei der elektronische Prozessor (80) des Weiteren das gespeicherte Programm ausführt, um das dritte elektronische Bewegungssignal von dem dritten PIR-Bewegungsdetektor (53) zu empfangen, und folgende Funktionen ausführt:
(a) als Reaktion darauf, dass sich das Ziel auf dem kontinuierlichen Pfad (114) durch das dritte Sichtfeld (56) bewegt, Überwachen des dritten elektronischen Bewegungssignals, um Zeiten der Erfassung (120) des Ziels durch den dritten PIR-Bewegungsdetektor (53) zu bestimmen; und
(b) Bereitstellen einer Ausgabe an einen Benutzer, die eine Lücke bei der Erfassung des Ziels auf dem kontinuierlichen Pfad (114) anzeigt, die aus den Zeiten der Erfassung (120) des Ziels durch den ersten, zweiten und dritten PIR-Bewegungsdetektor (42, 53) errechnet wird, wobei die Ausgabe eine notwendige Winkeleinstellung zum Bereitstellen einer lückenlosen Erfassung anzeigt.

3. Elektronisches Überwachungssystem (10) nach Anspruch 2, das des Weiteren eine Kamera (22) beinhaltet, die an dem dritten PIR-Bewegungsdetektor (53) angebracht ist und ein Sichtfeld (52) aufweist, das das dritte Sichtfeld (56) enthält.

4. Elektronisches Überwachungssystem (10) nach Anspruch 3, wobei die Kamera (22) mit dem ersten, zweiten und dritten PIR-Bewegungsdetektor (42, 53) kommuniziert, um von der Kamera (22) erfasste Videodaten zu erhalten und zu übertragen, wenn die Kamera (22) ein elektronisches Bewegungssignal von jedem oder einem des ersten, zweiten und dritten PIR-Bewegungsdetektors (42, 53) empfängt.

5. Elektronisches Überwachungssystem (10) nach einem der vorhergehenden Ansprüche, das des Weiteren eine drahtlose Verbindung beinhaltet, die zwischen dem elektronischen Prozessor (80) und einer tragbaren Vorrichtung (105) kommuniziert, die dazu angepasst ist, von dem sich auf einem kontinuierlichen Pfad (114) bewegenden Ziel getragen zu werden, und wobei die Ausgabe eine Anzeige auf der tragbaren Vorrichtung (105) einer Erfassung des Ziels durch jeden oder einen des ersten oder zweiten PIR-Bewegungsdetektors ist.

6. Elektronisches Überwachungssystem (10) nach einem der vorhergehenden Ansprüche, wobei die Ausgabe eine visuelle Anzeige (142) bereitstellt, die die Lücke anzeigt.

7. Elektronisches Überwachungssystem (10) nach einem der vorhergehenden Ansprüche, wobei mindestens einer des ersten und zweiten PIR-Bewegungsdetektors (42) des Weiteren ein Flutlicht (20a, 20b) beinhaltet, das durch das elektronische Bewegungssignal des zugehörigen PIR-Bewegungsdetektors (42) steuerbar ist.

8. Elektronisches Überwachungssystem (10) nach einem der vorhergehenden Ansprüche, das des Weiteren eine Kamera (22) mit einem Sichtfeld (52) beinhaltet, und wobei das Kamerasichtfeld (52) flächenmäßig größer ist als das Sichtfeld (48) jedes des ersten und zweiten PIR-Bewegungsdetektors (42).

9. Verfahren zur Umgebungsüberwachung, umfassend:
Positionieren eines ersten und eines zweiten PIR-Bewegungsdetektors (42), um eine Bewegung innerhalb eines ersten bzw. eines zweiten Sichtfeldes (48) zu erfassen, und Bereitstellen eines ersten bzw. eines zweiten elektronischen Bewegungssignals bei einer Erfassung von Bewegung in dem ersten bzw. dem zweiten Sichtfeld (48), wobei der erste und der zweite PIR-Bewegungsdetektor (42) auf einem ersten bzw. einem zweiten Gelenk (18a, 18c) getragen werden, die mit dem ersten bzw. dem zweiten PIR-Bewegungsdetektor (42) kommunizieren und eine unabhängige Winkeleinstellung des ersten und des zweiten Sichtfeldes (48) ermöglichen;
als Reaktion darauf, dass sich ein Ziel auf einem kontinuierlichen Pfad (114) durch das erste und zweite Sichtfeld (48) bewegt, Überwachen, durch einen elektronischen Prozessor (80), des ersten und zweiten elektronischen Bewegungssignals, um Zeiten der Erfassung (120) des Ziels durch den ersten und zweiten PIR-Bewegungsdetektor (42) zu bestimmen; und
Bereitstellen, durch den elektronischen Prozessor (80), einer Ausgabe an einen Benutzer, die eine Lücke bei der Erfassung des Ziels auf dem kontinuierlichen Pfad (114) durch den ersten und den zweiten PIR-Bewegungsdetektor (42) anzeigt, die aus den Zeiten der Erfassung (120) errechnet wird, wobei die Ausgabe eine notwendige Winkeleinstellung zum Bereitstellen einer lückenlosen Erfassung anzeigt.

10. Verfahren nach Anspruch 9, das des Weiteren beinhaltet:
Positionieren eines dritten PIR-Bewegungsdetektors (53), der ein entsprechendes drittes Sichtfeld (56) aufweist und ein drittes elektronisches Bewegungssignal bei Erfassung von Bewegung in dem dritten Sichtfeld (56) bereitstellt;
als Reaktion darauf, dass sich das Ziel auf dem kontinuierlichen Pfad (114) durch das dritte Sichtfeld (56) bewegt, Überwachen, durch den elektronischen Prozessor (80), der dritten elektronischen Bewegungssignale, um Zeiten der Erfassung (120) des Ziels durch den dritten PIR-Bewegungsdetektor (53) zu bestimmen; und
Bereitstellen, durch den elektronischen Prozessor (80), einer Ausgabe an einen Benutzer, die eine Lücke bei der Erfassung des Ziels auf dem kontinuierlichen Pfad (114) anzeigt, die aus den Zeiten der Erfassung (120) des Ziels durch den ersten, zweiten und dritten PIR-Bewegungsdetektor (42, 53) errechnet wird, wobei die Ausgabe eine notwendige Winkeleinstellung zum Bereitstellen einer lückenlosen Erfassung anzeigt.

11. Verfahren nach Anspruch 10, das des Weiteren eine Kamera (22) beinhaltet, die an dem dritten PIR-Bewegungsdetektor (53) angebracht ist und ein Sichtfeld (52) aufweist, das sich mit dem dritten Sichtfeld (56) bewegt, und das des Weiteren das Aktivieren der Kamera (22) umfasst, um Videodaten zu erhalten und zu übertragen, die von der Kamera (22) erfasst werden, wenn die Kamera (22) ein elektronisches Bewegungssignal von jedem oder einem des ersten, zweiten und dritten PIR-Bewegungsdetektors (42, 53) empfängt.

12. Verfahren nach einem der Ansprüche 9-11, das des Weiteren eine drahtlose Verbindung beinhaltet, die zwischen dem elektronischen Prozessor (80) und einer tragbaren Vorrichtung (150) kommuniziert, die dazu angepasst ist, von dem sich auf einem kontinuierlichen Pfad (114) bewegenden Ziel getragen zu werden, und die eine Anzeige auf der tragbaren Vorrichtung (150) einer Erfassung des Ziels durch jeden oder einen des ersten oder zweiten PIR-Bewegungsdetektors (42) ausgibt.

13. Verfahren nach einem der Ansprüche 9-12, wobei die Ausgabe eine visuelle Anzeige (142) bereitstellt, die die Lücke anzeigt.

14. Verfahren nach einem der Ansprüche 9 bis 13, wobei mindestens einer des ersten und zweiten PIR-Bewegungsdetektors (42) des Weiteren ein Flutlicht (20a, 20b) beinhaltet, und des Weiteren beinhaltend das Steuern des Flutlichts (20a, 20b) mit einem elektronischen Bewegungssignal des zugehörigen PIR-Bewegungsdetektors (42).

15. Verfahren nach einem der Ansprüche 9-14, das des Weiteren eine Kamera (22) mit einem Sichtfeld (52) beinhaltet, und wobei das Sichtfeld (52) der Kamera flächenmäßig größer ist als das Sichtfeld (48) des ersten und zweiten PIR-Bewegungsmelders (42).

## Revendications

1. Système de surveillance électronique (10) comprenant:
un premier détecteur et un deuxième détecteur de mouvement infrarouges passifs (PIR) (42) configurés pour détecter un mouvement, le premier et le deuxième détecteur de mouvement PIR (42) ayant respectivement un premier champ de vision et un deuxième champ de vision (48) et fournissant respectivement un premier signal et un deuxième signal de mouvement électroniques lors de la détection d'un mouvement dans le premier champ de vision et le deuxième champ de vision respectifs (48);
une première articulation et une deuxième articulation (18a, 18c) communiquant respectivement avec le premier détecteur et le deuxième détecteur de mouvement PIR (42) et permettant un réglage angulaire indépendant du premier champ de vision et du deuxième champ de vision (48),
un processeur électronique (80) exécutant un programme stocké et recevant les signaux de mouvement électroniques provenant du premier détecteur et du deuxième détecteur de mouvement PIR (42) et fonctionnant pour:
(a) en réponse à une cible se déplaçant le long d'un trajet continu (114) à travers le premier champ de vision et le deuxième champ de vision (48), surveiller le premier signal et le deuxième signal de mouvement électroniques afin de déterminer les moments de détection (120) de la cible par le premier détecteur et le deuxième détecteur de mouvement PIR (42); et
(b) fournir à un utilisateur une sortie indiquant un écart dans la détection par le premier détecteur et le deuxième détecteur de mouvement PIR (42) de la cible sur le trajet continu (114) imputé à partir des moments de détection (120), la sortie indiquant un ajustement angulaire nécessaire pour fournir une détection sans écart.

2. Système de surveillance électronique (10) selon la revendication 1, comprenant en outre:
un troisième détecteur de mouvement PIR (53) ayant un troisième champ de vision respectif (56) et fournissant un troisième signal de mouvement électronique lors de la détection d'un mouvement dans le troisième champ de vision (56);
une troisième articulation (18b) communiquant avec le troisième détecteur de mouvement PIR (53) permettant un ajustement angulaire indépendant du troisième champ de vision (56), et
dans lequel le processeur électronique (80) exécute en outre le programme stocké pour recevoir le troisième signal de mouvement électronique provenant du troisième détecteur de mouvement PIR (53) et fonctionne pour:
(a) en réponse au déplacement de la cible sur le trajet continu (114) à travers le troisième champ de vision (56), surveiller les troisièmes signaux de mouvement électroniques afin de déterminer les moments de détection (120) de la cible par le troisième détecteur de mouvement PIR (53); et
(b) fournir à un utilisateur une sortie indiquant un écart dans la détection de la cible sur le trajet continu (114) imputé à partir des moments de détection (120) de la cible par le premier détecteur, le deuxième détecteur et le troisième détecteur de mouvement PIR (42, 53), la sortie indiquant un ajustement angulaire nécessaire pour fournir une détection sans écart.

3. Système de surveillance électronique (10) selon la revendication 2, comprenant en outre une caméra (22) fixée au troisième détecteur de mouvement PIR (53) et ayant un champ de vision (52) contenant le troisième champ de vision (56).

4. Système de surveillance électronique (10) selon la revendication 3, dans lequel la caméra (22) communique avec le premier détecteur, le deuxième détecteur et le troisième détecteur de mouvement PIR (42, 53) pour obtenir et transmettre des données vidéo capturées par la caméra (22) lorsque la caméra (22) reçoit un signal de mouvement électronique provenant de chacun ou de l'un quelconque du premier, du deuxième détecteur et du troisième détecteur de mouvement PIR (42, 53).

5. Système de surveillance électronique (10) selon l'une quelconque des revendications précédentes, comprenant en outre une liaison sans fil communiquant entre le processeur électronique (80) et un dispositif portable (105) conçu pour être transporté par la cible se déplaçant sur un trajet continu (114) et dans lequel la sortie est une indication sur le dispositif portable (105) d'une détection de la cible par chacun ou l'un quelconque du premier détecteur ou du deuxième détecteur de mouvement PIR.

6. Système de surveillance électronique (10) selon l'une quelconque des revendications précédentes, dans lequel la sortie fournit un affichage visuel (142) indiquant l'écart.

7. Système de surveillance électronique (10) selon l'une quelconque des revendications précédentes, dans lequel au moins l'un du premier détecteur et du deuxième détecteur de mouvement PIR (42) comprend en outre un projecteur (20a, 20b) pouvant être commandé par le signal de mouvement électronique du détecteur de mouvement PIR associé (42).

8. Système de surveillance électronique (10) selon l'une quelconque des revendications précédentes, comprenant en outre une caméra (22) ayant un champ de vision (52), et dans lequel le champ de vision (52) de la caméra est plus grand en termes de superficie que le champ de vision (48) de chacun du premier détecteur et du deuxième détecteur de mouvement PIR (42).

9. Procédé de surveillance d'une zone, comprenant:
le positionnement du premier détecteur et du deuxième détecteurs de mouvement PIR (42) pour détecter un mouvement dans un premier champ de vision et un deuxième champ de vision respectifs (48), et la fourniture d'un premier signal et d'un deuxième signal de mouvement électroniques respectifs lors d'une détection de mouvement dans le premier champ de vision et le deuxième champ de vision respectifs (48), le premier détecteur et le deuxième détecteur de mouvement PIR (42) étant supportés par une première articulation et une deuxième articulation (18a, 18c) communiquant respectivement avec le premier détecteur et le deuxième détecteur de mouvement PIR (42) et permettant un réglage angulaire indépendant du premier champ de vision et du deuxième champ de vision (48);
en réponse à une cible se déplaçant sur un trajet continu (114) à travers le premier champ de vision et le deuxième champ de vision (48), surveiller, à l'aide d'un processeur électronique (80), le premier signal et le deuxième signal de mouvement électroniques afin de déterminer les moments de détection (120) de la cible par le premier détecteur et le deuxième détecteur de mouvement PIR (42); et
fournir, par le processeur électronique (80), une sortie à un utilisateur indiquant un écart dans la détection par le premier détecteur et le deuxième détecteur de mouvement PIR (42) de la cible sur le trajet continu (114) imputé à partir des moments de détection (120), la sortie indiquant un réglage angulaire nécessaire pour fournir une détection sans écart.

10. Procédé selon la revendication 9, comprenant en outre:
le positionnement d'un troisième détecteur de mouvement PIR (53) présentant un troisième champ de vision respectif (56) fournissant un troisième signal de mouvement électronique lors de la détection d'un mouvement dans le troisième champ de vision (56);
en réponse au déplacement de la cible sur le trajet continu (114) à travers le troisième champ de vision (56), la surveillance, par le processeur électronique (80), du troisième signal de mouvement électronique afin de déterminer les moments de détection (120) de la cible par le troisième détecteur de mouvement PIR (53); et
fournir, par le processeur électronique (80), une sortie à un utilisateur indiquant un écart dans la détection de la cible sur le chemin continu (114) imputé à partir des moments de détection (120) de la cible par le premier détecteur, le deuxième détecteur et le troisième détecteur de mouvement PIR (42, 53), la sortie indiquant un ajustement angulaire nécessaire pour fournir une détection sans écart.

11. Procédé selon la revendication 10, comprenant en outre une caméra (22) fixée au troisième détecteur de mouvement PIR (53) et dont le champ de vision (52) se déplace avec le troisième champ de vision (56), et comprenant en outre l'activation de la caméra (22) pour obtenir et transmettre des données vidéo capturées par la caméra (22) lorsque la caméra (22) reçoit un signal de mouvement électronique provenant de chacun ou de l'un quelconque du premier détecteur, du deuxième détecteur et du troisième détecteur de mouvement PIR (42, 53).

12. Procédé selon l'une quelconque des revendications 9 à 11, comprenant en outre une liaison sans fil communiquant entre le processeur électronique (80) et un dispositif portable (150) conçu pour être transporté par la cible se déplaçant sur un trajet continu (114) et émettant une indication sur le dispositif portable (150) d'une détection de la cible par chacun ou l'un quelconque du premier détecteur ou du deuxième détecteur de mouvement PIR (42).

13. Procédé selon l'une quelconque des revendications 9 à 12, dans lequel la sortie fournit un affichage visuel (142) indiquant l'écart.

14. Procédé selon l'une quelconque des revendications 9 à 13, dans lequel au moins l'un du premier détecteur et du deuxième détecteur de mouvement PIR (42) comprend en outre un projecteur (20a, 20b), et comprenant en outre le contrôle du projecteur (20a, 20b) avec un signal de mouvement électronique du détecteur de mouvement PIR associé (42).

15. Procédé selon l'une quelconque des revendications 9 à 14, comprenant en outre une caméra (22) présentant un champ de vision (52), et dans lequel le champ de vision (52) de la caméra est plus grand en termes de superficie que le champ de vision (48) du premier détecteur et du deuxième détecteur de mouvement PIR (42).
